# EUROPEAN PATENT APPLICATION

(11) **EP 1 842 476 A2**
(43) Date of publication of application: **10.10.2007**
(21) Application number: 06124020.6
(22) Date of filing: 14.11.2006
(51) Int. Cl.: A47L 15/00, A47L 15/42

(54) **Dishwasher having steam washing function and dishwashing method**

(30) Priority: 07.04.2006 KR 20060031986
(71) Applicant: Samsung Electronics Co., Ltd., Suwon-si, Gyeonggi-Do (KR)
(72) Inventor: Lee, Chang Hui, Gyeonggi-do (KR); Kim, Gyoung Rok, Seoul (KR); Ryu, Jung Chan, Gyeonggi-do (KR); Imm, So Jung, Seoul (KR); Yang, Dong Yol, Daejeon (KR); Bae, Joong Myeon, Daejeon (KR); Ryu, Seung Min, Daejon (KR); Yun, Chong Bae, Busan (KR); Lim, Sung Kwang, Chongnam (KR); Ko, Tae Hyun, Ulsan (KR); Jo, Hyun, Busan (KR); Kim, Hyun-Ho, Gangwon (KR); Lee, Hyang Jun, Seoul (KR)
(74) Representative: Grünecker, Kinkeldey, Stockmair & Schwanhäusser Anwaltssozietät

(57) **Abstract**

A steam/water mixed dishwasher using steam and water together, and, more particularly, a dishwasher and dishwashing method of achieving improvement in washing performance and efficiency via direct steam injection to dishes. The dishwasher includes a body (1) containing a dishwashing tub (2), at least one dish basket (28a,28b) disposed in the dishwashing tub and adapted to receive dishes therein, a steam generator (60) to generate steam by heating wash water, and steam injection nozzles (70) to inject the steam generated from the steam generator. The steam injection nozzles are disposed at the same height as a lower surface of the dish basket. The dishwashing method includes injecting steam from a number of the plurality of steam injection nozzles by opening a number of the plurality of control valves (64), to thereby maintain an injection pressure of the steam generated from the steam generator.

## Description

### BACKGROUND OF THE INVENTION

### 1. Field of the Invention

The present invention relates to a steam/water mixed dishwasher, which is designed to use steam and water together, and, more particularly, to a dishwasher and dishwashing method, which can achieve a steam dishwashing by injecting steam directly to dishes.

### 2. Description of the Related Art

Generally, a dishwasher is an apparatus to inject cold or hot water to dishes, which are disposed in a dish basket inside a dishwashing tub, for removing contaminants adhered to the dishes. The dishwasher includes several devices, such as a pump and nozzles to inject wash water, and a heater, etc. to generate hot water.

In a recent technology, steam as well as water has been used for dishwashing. Using steam in dishwashing has the effect of reducing time required to heat wash water, as compared to heat wash water using a heater. A conventional water dishwashing has problems sufficiently removing food particles and substances that are dried and solidly adhered to dishes. Therefore, to solve this problem, water vapor or steam is injected simultaneously or alternately with water to make the particles and substances be easily separated from the dishes via macerating, etc., prior to performing dishwashing, to improve a washing performance.

As examples of the conventional methods, Japanese Patent Laid-Open Publication No. 2003-0275158 discloses a dishwasher including a water injector and steam generator, to inject a mixture of water and steam through the same nozzle. Japanese Patent Laid-Open Publication No. 2004-0298514 discloses a dishwasher including a steam generator and steam sprayer, to intermittently spray steam, generated from the steam generator, into a dishwashing tub directly. In addition, Korean Patent Laid-Open Publication No. 1999-0001225 discloses a dishwasher in which high-pressure and high-temperature steam, which is obtained by heating and compressing cold wash water, is injected into a dishwashing tub.

In the above mentioned prior art dishwashers, steam is injected to a space in the dishwashing tub, for the purposes of reducing a time required to heat wash water, or macerating food particles and substances solidly adhered to dishes.

However, the prior art dishwashers cannot inject steam directly to dishes to wash the dishes using injection force of high-temperature steam, and therefore, there still exists a need for a steam injection nozzle to inject steam directly to dishes or a method to impart a high injection pressure to steam generated by a steam generator.

### SUMMARY OF THE INVENTION

Accordingly, it is an aspect of present invention to solve the above problems.

It is another aspect of the present invention to provide a dishwasher having steam injection nozzles to inject steam directly to dishes, thus achieving an improvement in dishwashing performance through the use of an injection force of the steam.

It is another aspect of the invention to provide a dishwashing method to maintain a pressure of steam generated from a steam generator, to maintain an injection force of steam being injected from steam injection nozzles.

Additional aspects and/or advantages of the invention will be set forth in part in the description which follows and, in part, will be apparent from the description, or may be learned by practice of the invention.

The foregoing and/or other aspects of the present invention are achieved by providing a dishwasher comprising a body containing a dishwashing tub and at least one dish basket disposed in the dishwashing tub to receive dishes therein; a steam generator to generate steam by heating wash water; and a steam injection nozzle unit to inject the steam generated by the steam generator, and the steam injection nozzle unit is disposed at a same height as a lower surface of the dish basket.

The lower surface of the dish basket comprises longitudinal ribs and transversal ribs crossing each other, and the steam injection nozzle unit may be located between the transversal ribs while coming into contact with the longitudinal ribs.

The steam nozzle injection device may comprise a plurality of the steam injection units. The dishwasher may further comprise a main steam supply pipe to receive the steam generated by the steam generator, the plurality of steam injection nozzles may be branched from the main steam supply pipe, and the main steam supply pipe may have a discharge valve to control discharge of the steam generated by the steam generator.

The plurality of steam injection nozzles may be arranged underneath at least a part of the lower surface of the dish basket. Alternatively, each of the plurality of steam injection nozzles may have curved portions formed on at least a part thereof, and the curved portions may protrude upward beyond the lower surface of the dish basket. In this case, corresponding portions of the dish basket, may have curved portions to be slidably movable through the curved portions of the steam injection nozzles.

Each of the plurality of steam injection nozzles may have one or more steam injection holes. The steam injection holes may have a cylindrical shape having a constant diameter at inner and outer surfaces of the associated steam injection nozzle, or may have a tapered cross section having an upwardly increasing diameter.

The plurality of steam injection holes formed at each steam injection nozzle may be arranged in parallel along a center axis of the steam injection nozzle, or may be arranged in such a manner that injection angles are alternated in opposite directions.

The foregoing and/or other aspects are also achieved by providing a dishwasher comprising a body; a dishwashing tub contained in the body; at least one dish basket disposed in the dishwashing tub to receive dishes therein: a steam generator to generate steam by heating wash water; and a plurality of steam injection nozzles to receive the steam generated by the steam generator and to inject the steam to the dish basket, and the plurality of steam injection nozzles are disposed at a same height as a lower surface of the dish basket.

The lower surface of the dish basket may be organized by longitudinal ribs and transversal ribs, and the respective steam injection nozzles are located between the transversal ribs while coming into contact with the longitudinal ribs.

The dishwasher may further comprise a main steam supply pipe to receive the steam supplied from the steam generator, the plurality of steam injection nozzles may be branched from the main steam supply pipe, and each of the steam injection nozzles may have a control valve to control flow of the steam supplied from the main steam supply pipe. Alternatively, the plurality of steam injection nozzles may be directly branched from the steam generator, and each steam injection nozzle may have a control valve to control flow of the steam supplied from the steam generator.

The foregoing and/or other aspects may also be achieved by providing a dishwasher comprising a body; a dishwashing tub contained in the body and at least one dish basket disposed in the dishwashing tub to receive dishes therein; a steam generator to generate steam by heating wash water; and a steam injection nozzle device to inject the steam generated by the steam generator, and the steam injection nozzle device is integrally formed with a lower surface of the dish basket.

The steam injection nozzle device may comprise a plurality of steam injection nozzles. The lower surface of the dish basket may be organized by longitudinal ribs and transversal ribs, the plurality of steam injection nozzles substituting for the transversal ribs.

The steam injection nozzles may have a plane arrangement, and be integrally formed with at least a part of the lower surface of the dish basket. Each of the plurality of the steam injection nozzles may have curved portions formed on at least a part thereof, and the curved portions may be integrally formed with the lower surface of the dish basket to protrude upward beyond the lower surface.

The dishwasher may further comprise a main steam supply pipe to receive the steam supplied from the steam generator, the plurality of steam injection nozzles being branched from the main steam supply pipe. The main steam supply pipe may comprise a stationary steam supply pipe secured to the steam generator, a movable steam supply pipe to move along with the dish basket, and a coupling structure to separably couple both the stationary and movable steam supply pipes to each other.

Assuming that one of the stationary and movable steam supply pipes is inserted into the other steam supply pipe, the coupling structure comprises a groove formed at an outer peripheral surface of the steam supply pipe to be inserted into the other steam supply pipe, and a protruding unit formed at an inner peripheral surface of the other steam supply pipe, in order to maintain coupling between the stationary and movable steam supply pipes. The coupling structure may further comprise a ring-shaped steam gasket to prevent leakage of steam.

The foregoing and/or other aspects are also achieved by providing a dishwasher comprising a body; a dishwashing tub contained in the body; at least one dish basket disposed in the dishwashing tub to receive dishes therein; a steam generator to generate steam by heating wash water; and a plurality of steam injection nozzles to receive the steam generated by the steam generator and to inject the steam to the dish basket, and the plurality of steam injection nozzles are integrally formed with a lower surface of the dish basket.

The dishwasher may further comprise a main steam supply pipe to receive the steam supplied from the steam generator, the plurality of steam injection nozzles being branched from the main steam supply pipe, and each of the plurality of steam injection nozzles may comprise a stationary steam injection nozzle secured to the main steam supply pipe, a movable steam injection nozzle to move along with the dish basket, and a coupling structure to separably couple both the stationary and movable steam injection nozzles to each other.

Assuming that one of the stationary and movable steam injection nozzles is inserted into the other steam injection nozzle, the coupling structure may comprise a groove formed at an outer peripheral surface of the steam injection nozzle to be inserted into the other steam injection nozzle, and a protruding unit formed at an inner peripheral surface of the other steam injection nozzle, in order to maintain coupling between the stationary and movable steam injection nozzles. The stationary steam injection nozzles of the plurality of steam injection nozzles may be provided with a plurality of control valves, respectively, at positions upstream of the plurality of coupling structures, to control flow of the steam supplied from the main steam supply pipe into the plurality of movable steam injection nozzles.

Alternatively, the plurality of steam injection nozzles may be directly branched from the steam generator, and each of the steam injection nozzles may comprise a stationary steam injection nozzle secured to the steam generator, a movable steam injection nozzle to move along with the dish basket, and a coupling structure to separably couple both the stationary and movable steam injection nozzles to each other. The configuration of the coupling structure is similar to the above description.

Each of the stationary steam injection nozzles of the plurality of steam injection nozzles is provided with a control valve at a position upstream of the associated coupling structure, to control flow of the steam supplied from the steam generator into the associated movable steam injection nozzle.

The foregoing and/or other aspects may also be achieved by providing a dishwashing method of a dishwasher comprising a body, a dishwashing tub contained on the body, a steam generator received in the dishwashing tub to generate steam, a plurality of steam injection nozzles to inject the steam generated by the steam generator, a plurality of control valves to control flow of the steam into the respective steam injection nozzles, comprising: injecting steam from a plurality of the steam injection nozzles comprising opening a plurality of the control valves, to maintain an injection pressure of the steam generated by the steam generator.

The injection of steam may be performed in such a manner that the number of the plurality of control valves are sequentially opened, thus causing the steam to be injected from the number of the plurality of steam injection nozzles in sequence, or the control valves are sequentially opened one by one, thus causing the steam to be injected from the respective steam injection nozzles in sequence.

The dishwasher may further comprise at least one water supply nozzle in the dishwashing tub to inject water into the dishwashing tub, and, during the injection of steam, the water supply nozzle may be controlled to inject water simultaneously, or to inject water alternately with the sequential steam injection.

The method may further comprise injecting water into the dishwashing tub without steam before or after the injection of steam.

### BRIEF DESCRIPTION OF THE DRAWINGS

These and/or other aspects and advantages of the invention will become apparent and more readily appreciated from the following description of the embodiments, taken in conjunction with the accompanying drawings, of which:
FIG. 1 is a sectional view showing the configuration of a dishwasher according to a first embodiment of the present invention;
FIG. 2 is a view taken as indicated by the arrowed lines A-A of FIG. 1;
FIGS. 3A to 3C are views showing a dish basket and steam injection nozzles, which are separated from each other, according to the first embodiment;
FIG. 4 is a view showing temperature distribution of steam depending on a distance from a steam injection hole of the first embodiment;
FIGS. 5A and 5B are views showing arrangements of steam injection nozzles;
FIGS. 6A and 6B are views showing the configuration of each steam injection hole of the first embodiment;
FIG. 7 is a flow chart showing a dishwashing operation of the dishwasher of the first embodiment of the present invention;
FIG. 8 is a graph showing washing time and temperature variation of a water dishwashing and steam/water dishwashing;
FIGS. 9A and 9B are views showing a dishwasher according to a second embodiment of the present invention;
FIG. 10 is a flow chart showing a dishwashing operation of the dishwasher according to the second embodiment of the present invention;
FIG. 11 is a graph showing a relationship between the number and diameter of steam injection holes and the injection pressure of the steam injection holes;
FIGS. 12A and 12B are views showing the configuration of a dish basket and steam injection nozzles according to a third embodiment of the present invention;
FIG. 13 is a view showing a coupling structure according to the third embodiment of the present invention; and
FIGS. 14A and 14B are views showing the configuration of a dish basket and steam injection nozzles according to a fourth embodiment of the present invention.

### DETAILED DESCRIPTION OF THE PREFERRED EMBODIMENTS

Reference will now be made in detail to the embodiments of the present invention, examples of which are illustrated in the accompanying drawings, wherein like reference numerals refer to like elements throughout. The embodiments are described below to explain the present invention by referring to the figures.

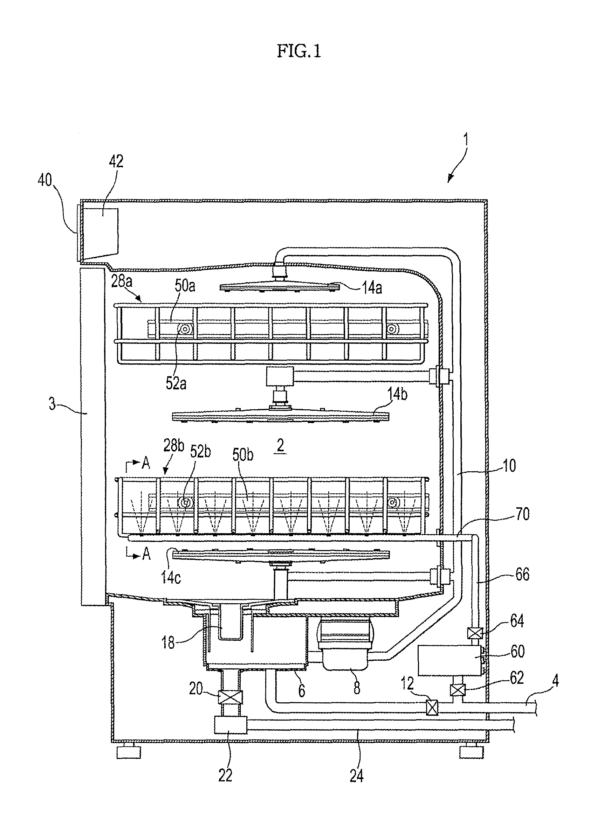

FIG. 1 is a sectional view showing a dishwasher according to a first embodiment of the present invention. As shown in FIG. 1, the dishwasher includes a body 1, a forwardly open dishwashing tub 2 received in the body 1, and a door 3 hingedly coupled to a front side of the body 1 to open and close a front opening of the dishwashing tub 2. The dishwashing tub 2 contains upper and lower dish baskets 28a and 28b, which are mounted at appropriately determined upper and lower locations of the dishwashing tub 2 to receive dishes therein. The dish baskets 28(28a and 28b) are externally provided with rollers 52a and 52b, respectively, such that the dish baskets 28a and 28b are disposed, in a slidingly movable manner, on upper and lower rails 50a and 50b, which are mounted at opposite inner sidewalls of the dishwashing tub 2. Of course, other various configurations for forward and rearward sliding movements are also possible.

A plurality of water injection nozzles 14 (14a, 14b and 14c) are mounted at positions above the upper dish basket 28a and above and below the lower dish basket 28b, to inject wash water to dishes received in the dish baskets 28a and 28b. Each water injection nozzle is connected to a circulating pipe 10 that is used to circulate and supply wash water.

A water collecting sump 6 is provided at a lower end of the dishwashing tub 2 such that wash water or rinse water, having been supplied from an external water supply pipe 4 through a water supply valve 12, is supplied into the sump 6. Once being collected in the sump 6, the water is supplied into the circulating pipe 10 by a circulating pump 8, and injected to dishes received in the dish baskets 28a and 28b through the water injection nozzles 14. Thereafter, the water is again collected in the sump 6 by way of a filter 18 mounted in the sump 6 to be used repeatedly for a washing or rinsing cycle. Although not shown, a heater may be mounted in the sump 6 or in a separate independent space, to dry dishes by injecting hot water to the dishes during a final rinsing cycle.

A drain pipe 24 is connected to a lower end of the sump 6 to discharge the used water to the outside after completing a washing or rinsing cycle. The drain pipe 24 is provided with a drain valve 20 and drain pump 22.

The dishwasher includes an input unit 40 provided at an upper end of the body 1 above the door 3 for input of the user's command and a controller 42 to control an overall dishwashing operation based on input signals from the input unit 40. The controller 42 is used to control operations of the water supply valve 12, circulating pump 8, drain valve 20 and drain pump 22, etc. such that a dishwashing operation is performed based on a washing command selected by a user or automatically selected optimal washing course. The input unit 40 may be provided with a display (not shown) to display an operational state, etc. of the dishwasher.

The dishwasher further includes a steam generator 60 and a plurality of steam injection nozzles 70 enabling steam dishwashing. The steam generator 60 is connected to the external water supply pipe 4 via a steam generating water supply valve 62, and steam, generated from the steam generator 60, is supplied into the steam injection nozzles 70 through a discharge valve 64.

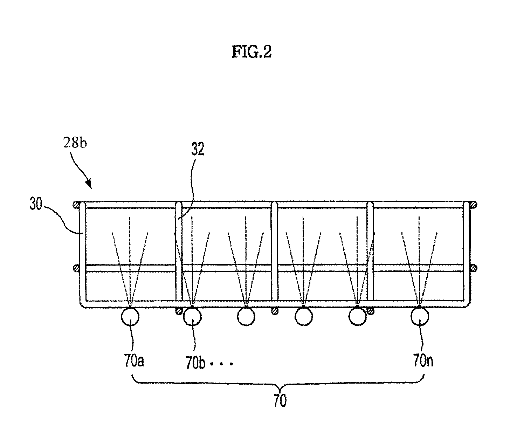

As can be seen from FIG. 1, the steam injection nozzles 70 are mounted at substantially the same height as a lower surface of a selected one of the dish baskets 28. Referring to FIG. 2, as indicated by the arrowed lines A-A of FIG. 1, the lower surface of the dish basket 28b is organized by intersecting longitudinal ribs 30 and transversal ribs 32. The steam injection nozzles 70 are mounted to come into direct contact with the longitudinal ribs 30 while being oriented parallel to the transversal ribs 32. With this configuration, the steam injection nozzles 70 can be mounted at substantially the same height as the lower surface of the dish basket, to inject steam to dishes proximally. This has the effect of allowing an injection force of steam to be utilized for dishwashing.

Although the present embodiment has the steam injection nozzles 70 mounted to the lower dish basket 28b, it should be understood that the steam injection nozzles 70 may be added to the upper dish basket 28a.

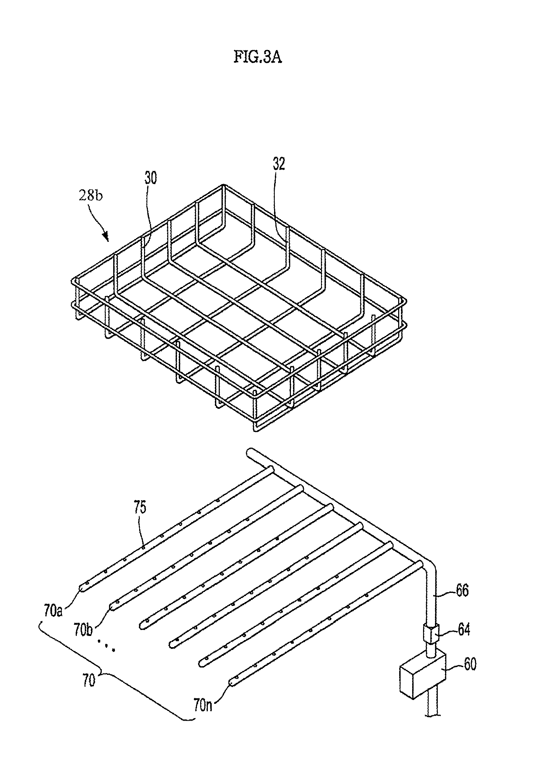

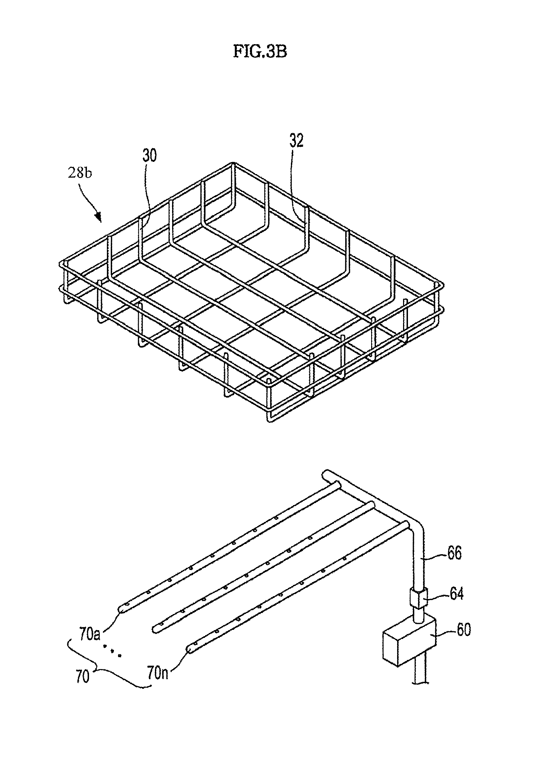

The configuration of the steam injection nozzles 70 will be explained in detail with reference to FIGS. 3A and 3B. Referring first to FIG. 3A, the dishwasher includes a main steam supply pipe 66 connected to an outlet of the steam generator 60. The steam injection nozzles 70 include a plurality of steam injection nozzles 70 (70a, 70b, ... 70n) branched from the main steam supply pipe 66 to inject steam to dishes. Each of the steam injection nozzles 70 has a plurality of steam injection holes 75. Although FIG. 3A illustrates the steam injection nozzles 70 branched from the main steam supply pipe 66, the steam injection nozzles 70 may be separately prepared and connected directly to the steam generator 60. The latter configuration will be explained hereinafter.

The steam injection nozzles 70 may be distributed by the same width as the dish basket 28b as shown in FIG. 3A, or may be arranged to inject steam to only a part of the lower surface of the dish basket 28b as shown in FIG. 3B. Also, although the plurality of steam injection nozzles 70 are illustrated in the above drawings, a single steam injection nozzle 70 may be mounted to the lower surface of the dish basket 28b. In use, some dishes, to which food substances difficult to wash, such as dried grains of cooked rice or oil stain, are adhered, may be arranged in a section where steam will be injected, and other dishes that are easy to wash may be arranged in a section where only water will be injected.

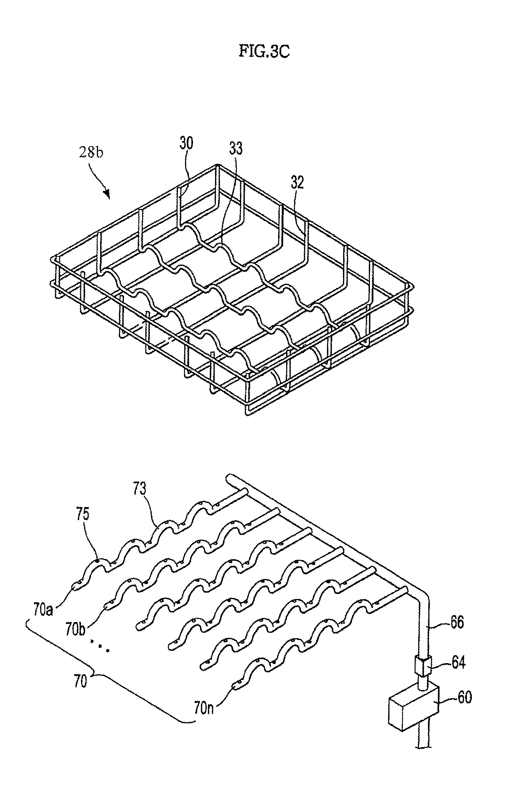

As shown in FIG. 3C, each of the steam injection nozzles 70 may be configured to protrude upward beyond the lower surface of the dish basket 28b. Specifically, the steam injection nozzle 70 is partially formed with upwardly protruding curved portions 73 such that the curved portions 73 protrude upward beyond the lower surface of the dish basket 28b. This allows steam to be injected to dishes, which are received in the dish basket 28b to be washed, with the maximum proximity. Where each steam injection nozzle 70 is partially formed with the curved portions 73 and the dish basket 28b is put into or taken out via a sliding movement, it is desirable that each longitudinal rib 30 of the dish basket 28b is formed with corresponding curved portions 33 to allow smooth passage of the curved portions 73 of each steam injection nozzle 70.

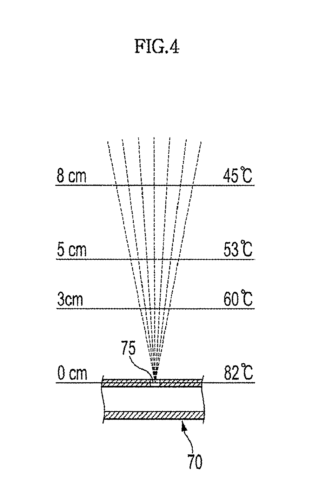

FIG. 4 is a view showing temperature distribution of steam injected from the steam injection hole 75.

It can be understood from FIG. 4 that the further the steam is injected from the steam injection hole 75, the more the temperature of the steam decreases. In other words, if steam is injected to dishes to be washed with the maximum proximity, the steam still has a highest temperature, and therefore, can exert a good steaming effect, i.e. macerating effect. Moreover, proximal injection imparts a high injection force to the steam, resulting in an improvement in dishwashing performance and efficiency.

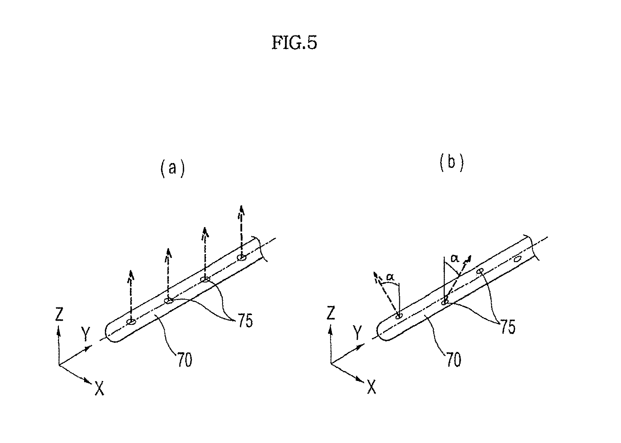

FIGS. 5A and 5B are views showing arrangements of the steam injection holes 75. Referring first to FIG. 5A, the steam injection holes 75 may be uniformly arranged along a center axis of the steam injection nozzle 70 to face upward, i.e. a Z-axis direction. Alternatively, as shown in FIG. 5B, the steam injection holes 75 may be alternately spaced apart, leftward and rightward, from the center axis of the steam injection nozzle 70 and tilted by a predetermined angle α° with respect to the Z-axis direction. The latter tilted arrangement has the effect of widening an injection range of steam.

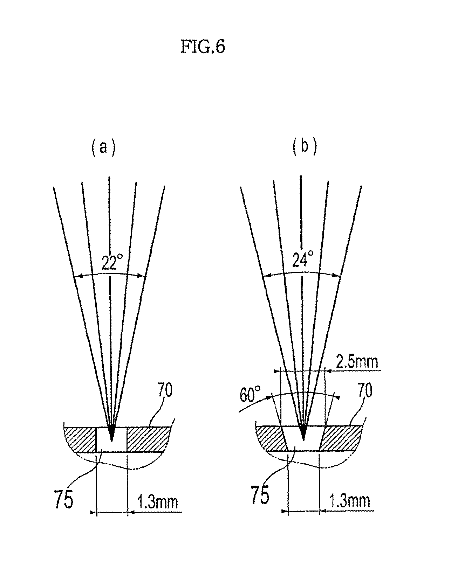

FIGS. 6A and 6B are views showing the configuration of the steam injection hole 75. Referring first to FIG. 6A, the steam injection hole 75 of the steam injection nozzle 70 may have a cylindrical shape having a constant diameter. Alternatively, as shown in FIG. 6B, the steam injection hole 75 may be tapered to have an outwardly increasing diameter in such a manner that a diameter of the steam injection hole 75 is larger at an outer side of the steam injection nozzle 70 than at an inner side of the steam injection nozzle 70. In association with the present embodiment, if the steam injection hole 75 has a constant diameter of 1.3mm as shown in FIG. 6A, steam will be injected with a spreading angle of 22°. Also, if the steam injection hole 75 has an inner-end diameter of 1.3mm and an outer-end diameter of 2.5mm (based on a tapered inner angle of 60°) as shown in FIG. 6B, the steam will be injected with a spreading angle of 24°. Accordingly, it is desirable that the steam injection hole 75 be configured as shown in FIG. 6B when it is necessary to spread steam over a broader range.

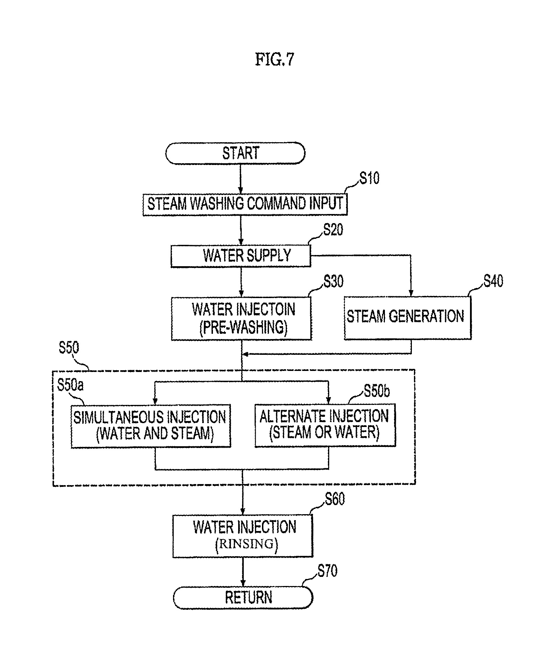

Hereinafter, a steam dishwashing operation of the dishwasher according to the first embodiment of the present invention will be explained with reference to FIG. 7. Herein, the description includes dishwashing operations except for the steam dishwashing operation, such as a general water dishwashing operation or a reduced-capacity dishwashing selectively using upper and/or lower dish baskets.

If a user inputs a steam dishwashing command after putting dishes to be washed into the dish basket 28 (S10), the water supply valve 12 is opened to supply water from the external water supply pipe 4 into the sump 6 (S20). The water, supplied into the sump 6, is circulated by the circulating pump 8, and injected to the dishes through the water injection nozzles, to perform a pre-washing (S30). The water is injected prior to injecting steam so that if food substances remaining on dishes contain liquid-phase protein such as eggs, etc., high-temperature steam may solidify the liquid-phase protein, resulting in a bad effect on dishwashing. Accordingly, a dishwashing course may include a water injection washing for 5 minutes at an initial stage thereof. Subsequently, prior to completing the water injection for the pre-washing, the steam generating water supply valve 62 is opened to supply water into the steam generator 60, to generate steam in the steam generator 60 (S40). If the steam generator 60 is capable of generating steam promptly, the steam generating water supply valve 62 may be opened after completing the pre-washing.

If the water injection for the pre-washing is completed, the discharge valve 64 is opened to inject steam through the main steam supply pipe 66 and the respective steam injection nozzles 70 that are mounted to the lower surface of the dish basket (S50). In this case, steam may be injected in a simultaneous injection manner (S50a) to inject water through the water injection nozzles 14 simultaneously with a steam injection, or an alternate injection manner (S50b) to alternately inject steam and water for a predetermined time period. If the steam dishwashing is completed with one of the above mentioned injection operations, water is again injected for 3 minutes, to perform a final rinsing operation (S60). Thereafter, additional operations including drainage and drying operations, etc. are additionally performed, and the overall dishwashing operation is completed (S70).

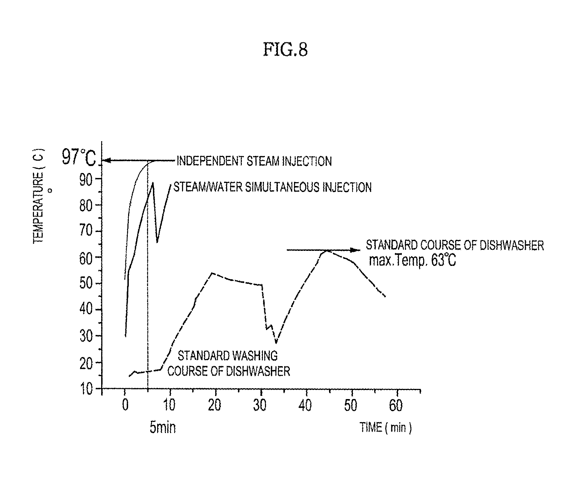

FIG. 8 is a graph showing experimental results of a temperature variation in the cases of water dishwashing and steam dishwashing. As can be understood from FIG. 8, in the case of a conventional dishwasher designed to heat water using a heater and to inject the heated water into a dishwashing tub, it obtains only a temperature of 63° at the maximum during a standard washing course, and a time required to reach a temperature of 50° is at least 40 minutes.

However, in the case of a dishwasher using steam, the graph shows a temperature rising up to 90° after approximately 5 minutes when adopting a steam/water simultaneous injection, and also, a temperature rising up to 97° within approximately 5 minutes when adopting an independent steam injection. Accordingly, with the dishwasher using steam, dried grains of cooked rice or other food substances difficult to wash. may be changed by high-temperature steam, so as to be easily washed, resulting in an improvement in washing performance and reducing a washing time.

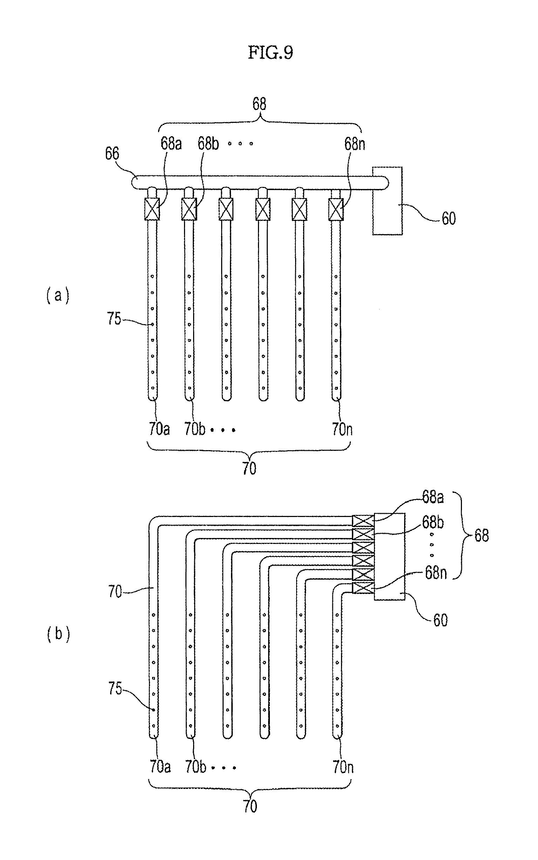

Next, the configuration of a dishwasher according to a second embodiment of the present invention will be explained with reference to FIG. 9. A description of the same elements of the first embodiment will be omitted. Referring first to FIG. 9A, the dishwasher of the second embodiment includes the steam generator 60, main steam supply pipe 66 and steam injection nozzles 70. However, unlike the first embodiment wherein steam, generated from the steam generator 60, is supplied or not supplied into all the steam injection nozzles 70 through the main steam supply pipe 66 and discharge valve 64, in the second embodiment, control valves 68 (68a to 68n) are installed on the steam injection nozzles 70a to 70n, respectively, to control flow of steam into the respective steam injection nozzles 70. Alternatively, as shown in FIG. 9B, the control valves 68 of the respective steam injection nozzles 70 may be directly connected to the steam generator 60 when the main steam supply pipe 66 is eliminated.

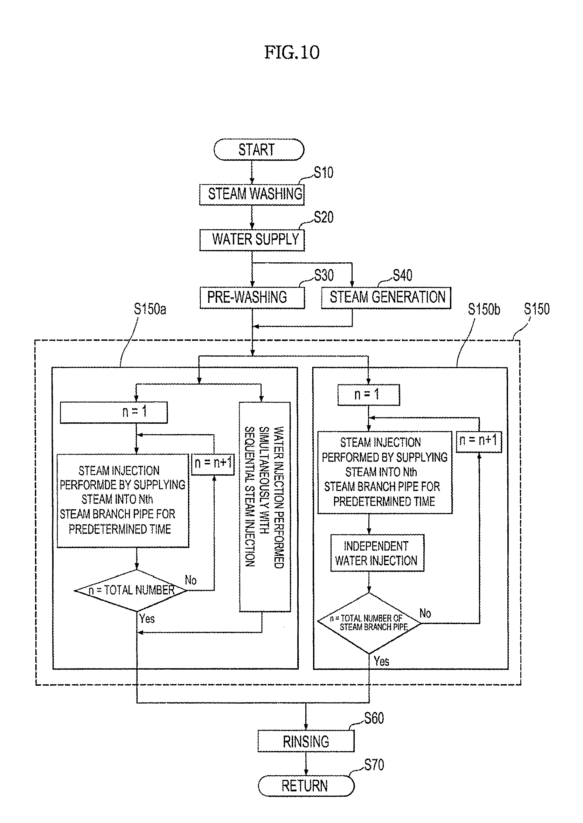

FIG. 10 is a flow chart showing a dishwashing operation of the dishwasher of the second embodiment of the present invention. A description of the same operations as the operation control of the first embodiment will be omitted. In the second embodiment, while controlling a sequential steam injection (S150) of the respective steam injection nozzles 70, a simultaneous injection manner (S150a) to simultaneously inject water and steam, or an alternate injection manner (S150b) to alternately inject steam and water may be adopted.

Now, the simultaneous injection manner of injecting water and steam simultaneously while controlling a sequential steam injection of the respective steam injection nozzles 70 will be first explained. As shown in the operation (S150a) of FIG. 10, the controller 42 opens the control valve 68a of the first steam injection nozzle 70a and closes the other control valves 68b to 68n, so as to inject steam only through the first steam injection nozzle 70a.

If the steam injection for a predetermined time is completed, the controller 42 opens the control valve 68b of the second steam injection nozzle 70b and closes the other control valves 68a and 68c to 68n, to inject steam only through the second steam injection nozzle 70b for the predetermined time. In this way, if steam is injected through the final steam injection nozzle 70n, control of a sequential steam injection is completed. During the sequential steam injection, water is continuously injected, thus achieving a steam/water simultaneous injection.

Next, the alternate injection manner for injecting water and steam alternately while controlling a sequential steam injection of the respective steam injection nozzles 70 will be explained. As shown in the operation (S150b), the controller 42 opens the control valve 68a of the first steam injection nozzle 70a and closes the other control valves 68b to 68n, to inject steam only through the first steam injection nozzle 70a. If the steam injection for a predetermined time is completed, the controller 42 closes the control valve 68a of the first steam injection nozzle 70a, and injects only water for a predetermined time. After completing the water injection, the controller 42 opens the control valve 68b of the second steam injection nozzle 70b and closes the other control valves 68a and 68c to 68n, so as to inject steam only through the second steam injection nozzle 70b for the predetermined time. Then, if the steam injection is completed, only water is injected for the predetermined time. In this manner, if steam is injected through the final steam injection nozzle 70n and the water injection is completed, control of a sequential steam injection and control of a steam/water simultaneous injection are completed.

Although the present embodiment explains a case that the steam injection nozzles are sequentially operated to inject steam one by one, the steam injection nozzles may be divided in groups of two or more such that steam is injected per the two or more steam injection nozzles so long as an injection pressure of steam being injected from the steam injection holes 75 is more than a desired pressure. In addition to this sequential steam injection, steam may be injected per a predetermined number of steam injection nozzles in any order.

With the configuration and control method of the second embodiment, a steam injection pressure at the steam injection holes 75 of the respective steam injection nozzles 70 can be increased greatly as compared to steam supplied into the respective steam injection nozzles 70 in only one injection, to a level sufficient to be directly utilized for dishwashing.

Specifically, pressure of steam is a factor having a large effect on dishwashing performance, and thus, good dishwashing results are obtained when the pressure of steam being injected from each steam injection hole is greater than a predetermined pressure.

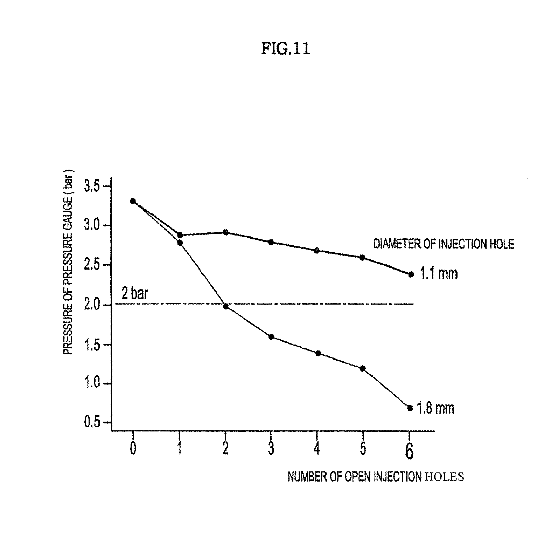

FIG. 11 is a graph showing the relationship between the number and diameter of steam injection holes and the pressure of steam being injected from the steam injection holes, which is obtained as a result of experiment. A steam generator used in the above experiment has a capacity capable of generating steam having a pressure of 6 bar, a flow rate of 200 cc/min, and a temperature of 115°, and a steam injection nozzle having six steam injection holes.

In the above experiment, a steam injection pressure sufficient for dishwashing (hereinafter, referred to as "steam-washing pressure") was set to 2 bar. As can be seen from FIG. 11, the greater the number of opened steam injection holes, the more an injection pressure of steam injected from the respective steam injection holes decreases. Also, even when the same number of steam injection holes is opened, the larger the diameter of the steam injection hole, the more a steam injection pressure at the steam injection holes decreases.

Accordingly, to wash dishes using an injection pressure of steam, it is necessary to regulate a capacity of the steam generator 60, the number of steam injection nozzles 70 and the number and diameter of steam injection holes 75, so as to obtain a desired steam injection pressure of each steam injection hole 75 beyond the steam-washing pressure. However, since an appropriate number of steam injection nozzles 70 must be provided or an appropriate number of steam injection holes 75 must be formed on each steam injection nozzle 70 in order to allow steam, generated from the steam injection nozzles 70, to be uniformly injected over the lower surface of the dish basket 28, it is undesirable to unconditionally reduce the number or diameter of the steam injection holes 75. This is the case even though a steam injection pressure higher than the steam-washing pressure is desired.

For this reason, the second embodiment of the present invention exemplifies a sequential steam injection to inject steam through the respective steam injection nozzles one by one under control, thus achieving a higher steam injection pressure for each steam injection nozzle than the steam-washing pressure. For example, it is assumed, based on the experiment of FIG. 11, that steam, generated from the steam generator, has a pressure of 6 bar, each steam injection nozzle has six steam injection holes, and a diameter of each steam injection hole is 1.1mm. If a supply of steam is controlled in such a manner that steam is injected from a single steam injection nozzle, a resulting steam injection pressure at each steam injection hole is approximately 2.5 bar even if all six steam injection holes are opened. The high injection pressure of steam being injected from each steam injection nozzle exceeding the steam-washing pressure of 2 bar is sufficient to be utilized for dishwashing.

In the related art, steam has been used for the purposes of macerating food substances adhered to dishes or raising a temperature. However, with the steam injection control of the second embodiment of the present invention, steam can be utilized for dishwashing by virtue of a desired injection pressure thereof. As a result of the experiment performed, based on the sequential steam injection control, it has been found that substances remaining on dishes can be clearly removed to complete dishwashing when steam is only injected for approximately 9 minutes by use of a single steam injection nozzle having six steam injection holes of 1.3mm diameter. That is, when a dishwasher having seven steam injection nozzles is used to wash dishes using steam, a total washing time is 63 minutes.

Meanwhile, as a result of performing dishwashing by injecting water simultaneously with the sequential steam injection control, it has been found that a washing time by the single steam injection nozzle is reduced to 2 minutes. Accordingly, in the case of a dishwasher having seven steam injection nozzles, a total time required to inject water and steam simultaneously is 14 minutes. Assuming that it takes five minutes and three minutes to perform a pre-washing and rinsing washing, respectively, a total dishwashing time, which is required to perform the pre-washing, sequential steam injection and steam/water simultaneous injection and rinsing, is 22 minutes. Therefore, even if dishwashing is sufficiently achieved only by the sequential steam injection, it is still possible to simultaneously or alternately inject water with steam, as shown in the operation (S150) of FIG. 10.

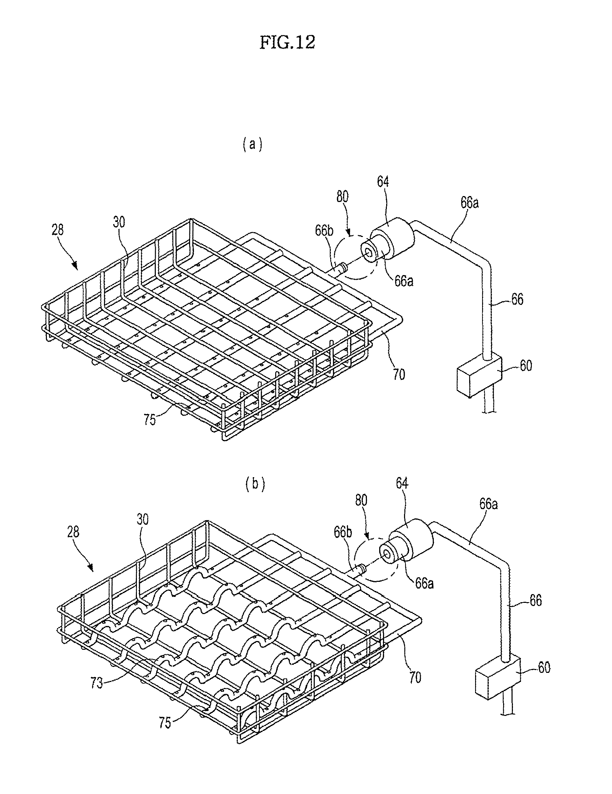

Now, the configuration of a dishwasher of a third embodiment of the present invention will be explained with reference to FIGS. 5, 12A and 12B. A description of the same configurations as those of the first embodiment will be omitted. In the third embodiment of the present invention, at least a part of each of the steam injection nozzles 70 is integrally formed with the lower surface of the dish basket 28. When organizing the dish basket 28 with the longitudinal ribs 30 and transversal ribs, the vertical ribs may be substituted by the steam injection nozzles 70.

Although FIGS. 12A and 12B illustrate the steam injection nozzles 70 integrally formed throughout the lower surface of the dish basket 28, it should be understood that a part of the lower surface may be organized by the transversal ribs 32, and the remaining lower surface may be organized by the steam injection nozzles 70, or only one steam injection nozzle 70 may be integrally formed with the lower surface. The plurality of steam injection nozzles 70 substituting for transversal ribs may take the form of straight bars as shown in FIG. 12A, or may have curved portions 73 uniformly arranged thereon as shown in FIG. 12B. When the steam injection nozzles 70 are integrally formed with the dish basket 28, it is unnecessary to provide the dish basket 28 with the longitudinal ribs 30 as shown in FIG. 3C, in spite of the provision of the curved portions 73 of the steam injection nozzles 70.

To ensure forward and rearward sliding movement of the dish basket 28 when the steam injection nozzles 70, which include a steam injection nozzle unit, are integrally formed with the lower surface of the dish basket 28, a coupling structure 80 is provided on the main steam supply pipe 66 to separably connect the steam injection nozzle unit 70 to the steam generator 60. In this case, the discharge valve 64, which is used to control flow of steam from the steam generator 60 into the respective steam injection nozzles 70, is mounted upstream of the coupling structure 80.

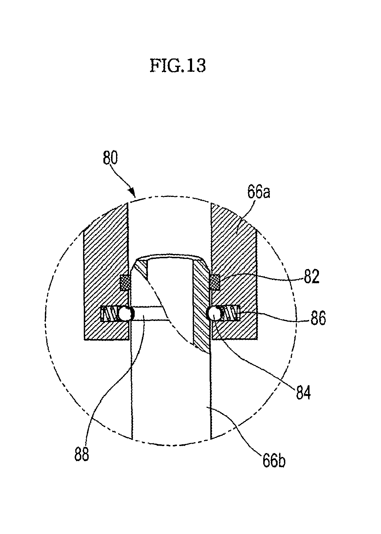

Now, the configuration of the coupling structure 80 will be explained with reference to FIG. 13. The main steam supply pipe 66 includes of a stationary steam supply pipe 66a secured to the steam generator 60, and a movable steam supply pipe 66b connected to the steam injection nozzle unit 70 to move along with the dish basket 28. To insert the movable steam supply pipe 66b into the stationary steam supply pipe 66a, the stationary steam supply pipe 66a has an inner diameter equal to an outer diameter of the movable steam supply pipe 66b. A circumferential groove 88 is formed at an outer peripheral surface of the movable steam supply pipe 66b at a position where the movable steam supply pipe 66b is inserted into the stationary steam supply pipe 66a, whereas a protruding unit to be seated in the groove 88 of the movable steam supply pipe 66b is formed at a corresponding position of an inner peripheral surface of the stationary steam supply pipe 66a. The protruding unit includes a circumferential groove formed in an inner peripheral surface of the stationary steam supply pipe 66a, and balls 84 and elastic springs 86 inserted in the groove. In addition to the above mentioned configuration, the protruding unit may take any other configurations so long as it can reciprocate radially or be elastically deformable while being seated in the groove. If the movable steam supply pipe 66b is inserted into the stationary steam supply pipe 66a, the balls 84 are inserted into and seated in the groove 88 formed at the outer peripheral surface of the movable steam supply pipe 66b, thereby acting not only to maintain strong coupling between the stationary and movable supply pipes 66a and 66b, but also to provide a user with a click feeding that informs of a proper coupling. To prevent leakage of high-pressure steam when the movable steam stationary pipe 66b is inserted into the stationary steam supply pipe 66a, a steam gasket 82 is formed at the inner peripheral surface of the stationary steam supply pipe 66a of the main steam supply pipe 66. Although FIG. 13 illustrates the movable stationary steam pipe 66b inserted into the stationary steam supply pipe 66a, conversely, the stationary steam supply pipe 66a may be inserted into the movable steam stationary pipe 66b.

In accordance with the third embodiment of the present invention, the steam injection nozzle 70 is integrally formed with the dish basket 28, thus allowing the maximum proximal injection of steam. This has the effect of achieving high-temperature washing, and consequently, reducing a washing time. The control of dishwashing operation of the third embodiment is similar to that of the first embodiment, and thus, a description thereof will be omitted.

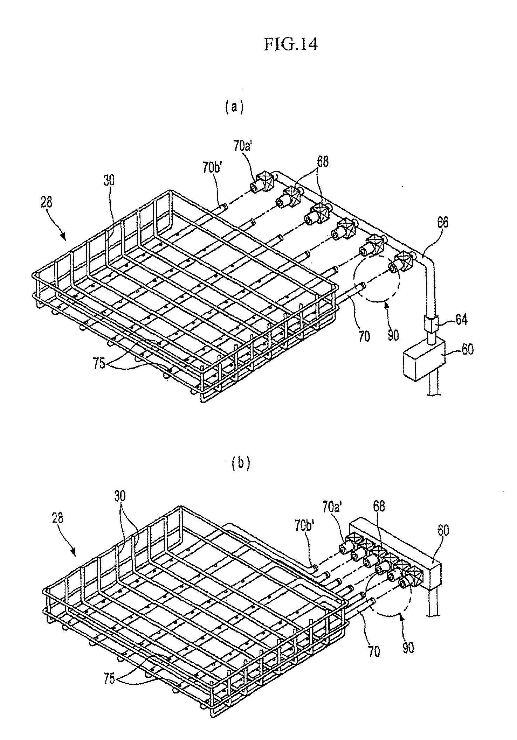

Now, the configuration of a dishwasher of a fourth embodiment of the present invention will be explained with reference to FIGS. 14A and 14B. A description of the same configurations as those of the third embodiment will be omitted. Although the third embodiment illustrates the single coupling structure 80 defined on the main steam supply pipe 66, in the fourth embodiment, a plurality of coupling structures 90 are provided with respect to the respective steam injection nozzles 70 which are integrally formed with the lower surface of the dish basket 28.

As shown in FIG. 14A, each of the steam injection nozzles 70 includes a stationary steam injection nozzle 70a' coupled to the main steam supply pipe 66 and a movable steam injection nozzle 70b' integrally formed with the dish basket 28 to move along with the dish basket 28. Also, the plurality of coupling structures 90 (90a to 90n) are defined on both the stationary and movable steam injection nozzles 70a' and 70b' to separably couple the nozzles 70a' and 70b' to each other. Each of the stationary steam injection nozzles 70a' is circumferentially installed with a control valve 68 at a position upstream of the associated coupling structure, to control flow of steam from the steam generator 60 into the respective steam injection nozzles 70. Alternatively, as shown in FIG. 14B, each of the steam injection nozzles 70 may include a stationary steam injection nozzle 70a' branched directly from the steam generator 60 without the main steam supply pipe 66, and a movable steam injection nozzle 70b' integrally formed with the dish basket 28 to move along with the dish basket 28. In this alternative configuration, similarly, the plurality of coupling structures 90; 90a to 90n are defined on both the stationary and movable steam injection nozzles 70a' and 70b' to separably couple the nozzles 70a' and 70b' to each other, and each of the stationary steam injection nozzles 70a' is circumferentially installed with the control valve 68 at a position upstream of the associated coupling structure, to control flow of steam from the steam generator 60 into the respective steam injection nozzles 70.

The configuration of the coupling structure 90 can be embodied in the same manner as that of the coupling structure 80 of the third embodiment. Also, the control of a dishwashing operation of the fourth embodiment is substantially the same as that of the second embodiment, and thus, a description thereof will be omitted.

As apparent from the above description, in accordance with a dishwasher of the embodiments of the present invention, high-temperature steam can be directly injected to dishes at the same height as the lower surface of a dish basket. This has the effect of making food substances solidly adhered to the dishes, such as dried grains of cooked rice, to be easily removed, resulting in an improvement in dishwashing performance as well as a reduction in washing time. Further, injecting steam proximal to dishes allows an injection pressure of the steam to be utilized for dishwashing. When steam injection nozzles are integrally formed with the dish basket, steam can be injected to dishes with the maximum proximity while maintaining a high-temperature and high-pressure state thereof, resulting in an outstanding improvement in dishwashing performance and efficiency.

In addition, in accordance with a sequential steam injection control of the embodiments of the present invention, it is possible to obtain a higher steam injection pressure than that obtained when steam is injected with only one injection. The higher steam injection pressure can be utilized for dishwashing, resulting in a further improvement in dishwashing performance.

Although a few embodiments of the present invention have been shown and described, it would be appreciated by those skilled in the art that changes may be made in these embodiments without departing from the principles and spirit of the invention, the scope of which is defined in the claims and their equivalents.

## Claims

1. A dishwasher comprising:
a body;
a dishwashing tub contained in the body;
at least one dish basket disposed in the dishwashing tub to receive dishes therein;
a steam generator to generate steam by heating wash water; and
a steam injection nozzle unit to inject the steam generated by the steam generator,
wherein the steam injection nozzle unit is disposed at a same height as a lower surface of the dish basket.

2. The dishwasher according to claim 1, wherein the lower surface of the dish basket comprises longitudinal ribs and transversal ribs crossing each other, and the steam injection nozzle unit is located between the transversal ribs while coming into contact with the longitudinal ribs.

3. The dishwasher according to claim 1, wherein the steam nozzle injection unit comprises a plurality of steam injection nozzles.

4. The dishwasher according to claim 3, further comprising:
a main steam supply pipe to receive the steam generated by the steam generator, the plurality of steam injection nozzles being branched from the main steam supply pipe, the main steam supply pipe having a discharge valve to control discharge of the steam generated by the steam generator.

5. The dishwasher according to claim 3, wherein the plurality of steam injection nozzles are arranged underneath at least a part of the lower surface of the dish basket.

6. The dishwasher according to claim 3, wherein each of the plurality of steam injection nozzles has curved portions formed on at least a part thereof, the curved portions protruding upward beyond the lower surface of the dish basket.

7. The dishwasher according to claim 6, wherein the lower surface of the dish basket comprises a plurality of longitudinal ribs and the longitudinal ribs have curved portions to be slidably movable through the curved portions of the steam injection nozzles.

8. The dishwasher according to claim 3, wherein each of the plurality of steam injection nozzles has one or more steam injection holes.

9. The dishwasher according to claim 8, wherein the steam injection holes have a tapered cross section having an upwardly increasing diameter.

10. The dishwasher according to claim 8, wherein each of the steam injection nozzles has a plurality of steam injection holes having respective injection angles alternated in opposite directions.

11. A dishwasher comprising:
a body;
a dishwashing tub contained in the body; and
at least one dish basket disposed in the dishwashing tub to receive dishes therein;
a steam generator to generate steam by heating wash water; and
a plurality of steam injection nozzles to receive the steam generated by the steam generator and to inject the steam to the dish basket,
wherein the plurality of steam injection nozzles are disposed at a same height as a lower surface of the dish basket.

12. The dishwasher according to claim 11, wherein the lower surface of the dish basket comprises longitudinal ribs and transversal ribs crossing the longitudinal ribs, and the respective steam injection nozzles are located between the transversal ribs while coming into contact with the longitudinal ribs.

13. The dishwasher according to claim 11, further comprising:
a main steam supply pipe to receive the steam generated by the steam generator, the plurality of steam injection nozzles being branched from the main steam supply pipe, each of the steam injection nozzles having a control valve to control a flow of the steam supplied from the main steam supply pipe.

14. The dishwasher according to claim 11, wherein the plurality of steam injection nozzles are directly branched from the steam generator, and each of the steam injection nozzles has a control valve to control a flow of the steam supplied from the steam generator.

15. A dishwasher comprising:
a body;
a dishwashing tub contained in the body;
at least one dish basket disposed in the dishwashing tub to receive dishes therein;
a steam generator to generate steam by heating wash water; and
a steam injection nozzle unit to inject the steam generated by the steam generator,
wherein the steam injection nozzle unit is integrally formed with a lower surface of the dish basket.

16. The dishwasher according to claim 15, wherein the steam injection nozzle unit comprises a plurality of steam injection nozzles.

17. The dishwasher according to claim 16, wherein the lower surface of the dish basket comprises longitudinal, the plurality of steam injection nozzles being transverse to the longitudinal ribs.

18. The dishwasher according to claim 16, wherein the steam injection nozzles are arranged in a plane, and are integrally formed with at least a part of the lower surface of the dish basket.

19. The dishwasher according to claim 16, wherein each of the plurality of the steam injection nozzles has a curved portion formed on at least a part thereof, the curved portions being integrally formed with the lower surface of the dish basket protruding upward beyond the lower surface.

20. The dishwasher according to claim 16, further comprising:
a main steam supply pipe to receive the steam generated by the steam generator, the plurality of steam injection nozzles being branched from the main steam supply pipe,
wherein the main steam supply pipe comprises a stationary steam supply pipe secured to the steam generator, a movable steam supply pipe to move along with the dish basket, and a coupling unit to separably couple the stationary and movable steam supply pipes to each other.

21. The dishwasher according to claim 20, wherein one of the stationary and movable steam supply pipes is inserted into the other of the stationary and movable steam supply pipes, the coupling unit comprises a groove formed at an outer peripheral surface of the inserted steam supply pipe, and a protruding unit formed at an inner peripheral surface of the other steam supply pipe, to maintain coupling between the stationary and movable steam supply pipes.

22. The dishwasher according to claim 20, wherein the coupling unit further comprises a ring-shaped steam gasket to prevent leakage of the steam.

23. A dishwasher comprising:
a body;
a dishwashing tub contained in the body;
at least one dish basket disposed in the dishwashing tub to receive dishes therein;
a steam generator to generate steam by heating wash water; and
a plurality of steam injection nozzles to receive the steam generated by the steam generator and to inject the steam to the dish basket,
wherein the plurality of steam injection nozzles are integrally formed with a lower surface of the dish basket.

24. The dishwasher according to claim 23, further comprising:
a main steam supply pipe to receive the steam generated by the steam generator, the plurality of steam injection nozzles being branched from the main steam supply pipe,
wherein each of the plurality of steam injection nozzles comprises a stationary steam injection nozzle secured to the main steam supply pipe, a movable steam injection nozzle to move along with the dish basket, and a coupling unit to separably couple the stationary and movable steam injection nozzles to each other.

25. The dishwasher according to claim 24, wherein one of the stationary and movable steam injection nozzles is inserted into the other of the stationary and movable steam injection nozzles, the coupling unit comprises a groove formed at an outer peripheral surface of the inserted steam injection nozzle, and a protruding unit formed at an inner peripheral surface of the other steam injection nozzle, to maintain coupling between the stationary and movable steam injection nozzles.

26. The dishwasher according to claim 24, wherein the stationary steam injection nozzles of the plurality of steam injection nozzles are provided with a plurality of control valves, respectively, at positions upstream of the plurality of coupling units, to control a flow of the steam generated by the main steam supply pipe into the plurality of movable steam injection nozzles.

27. The dishwasher according to claim 23, wherein the plurality of steam injection nozzles are directly branched from the steam generator, and
each of the steam injection nozzles comprises a stationary steam injection nozzle secured to the steam generator, a movable steam injection nozzle to move along with the dish basket, and a coupling unit to separably couple the stationary and movable steam injection nozzles to each other.

28. The dishwasher according to claim 27, wherein one of the stationary and movable steam injection nozzles is inserted into the other of the stationary and movable steam injection nozzles, the coupling structure comprises a groove formed at an outer peripheral surface of the inserted steam injection nozzle, and a protruding unit formed at an inner peripheral surface of the other steam injection nozzle, to maintain coupling between the stationary and movable steam injection nozzles.

29. The dishwasher according to claim 27, wherein the stationary steam injection nozzles of the plurality of steam injection nozzles are provided with a plurality of control valves, respectively, at positions upstream of the plurality of coupling units, to control flow of the steam supplied from the steam generator into the plurality of movable steam injection nozzles.

30. A dishwashing method of a dishwasher comprising a body, a dishwashing tub contained in the body, a steam generator received in the dishwashing tub to generate steam, a plurality of steam injection nozzles to inject the steam generated by the steam generator, a plurality of control valves to control flow of the steam into the respective steam injection nozzles, comprising:
injecting steam from a plurality of the steam injection nozzles comprising opening a plurality of the control valves, to maintain an injection pressure of the steam generated by the steam generator.

31. The method according to claim 30, wherein the injecting of the steam comprises sequentially opening the plurality of control valves, thus causing the steam to be injected from the plurality of steam injection nozzles in sequence.

32. The method according to claim 31, wherein the injecting of the steam comprises sequentially opening the control valves one by one, thus causing the steam to be injected from the respective steam injection nozzles in sequence.

33. The method according to claim 31, wherein the dishwasher further comprises at least one water supply nozzle in the dishwashing tub to inject water into the dishwashing tub, and the method further comprises injecting the water simultaneously during the injecting of the steam.

34. The method according to claim 31, wherein the dishwasher further comprises a water supply nozzle in the dishwashing tub to inject water into the dishwashing tub, and the method further comprises injecting the water simultaneously during the injecting of the steam.

35. The method according to claim 30, further comprising:
injecting water into the dishwashing tub without the steam before or after the injecting of the steam.

36. A dishwasher comprising:
a basket to receive a dish; and
a nozzle at a same height as a lower surface of the basket to inject steam to the dish.

37. A dishwasher comprising:
a basket to receive a dish; and
a nozzle to inject steam directly to the dish.
